# EUROPEAN PATENT SPECIFICATION

(11) **EP 1 762 085 B1**
(45) Date of publication and mention of the grant of the patent: **25.09.2013**
(21) Application number: 05754994.1
(22) Date of filing: 26.05.2005
(51) Int. Cl.: H04M 1/02, H04M 1/73

(54) **MECHANICAL LAYOUT AND COMPONENT PLACEMENT FOR THIN CLAMSHELL PHONE**
MECHANISCHES LAYOUT UND PLAZIERUNG VON KOMPONENTEN FÜR EIN DÜNNES FALTBARES TELEFON
AGENCEMENT MECANIQUE ET DISPOSITION DE COMPOSANTS DANS UN TELEPHONE A DOUBLE COQUE MINCE

(30) Priority: 21.06.2004 US 874017
(43) Date of publication of application: 14.03.2007
(73) Proprietor: Motorola Mobility LLC, Libertyville, IL 60048 (US)
(72) Inventor: SPENCE, Michael, F., Libertyville, Illinois 60048 (US); ALLORE, Joseph, L., Mundelein, Illinois 60060 (US); DABBEEKEH, John, L., Zion, Illinois 60099 (US); JELLICOE, Riger, J., Woodstock, Illinois 60098 (US); STONE, Frank, H., Waukegan, Illinois 60087 (US); VOLLMER, Simon, F., Hawthorn Woods, Illinois 60047 (US); WEISS, Gary, Buffalo Grove, Illinois 60089 (US)
(74) Representative: Openshaw, Paul Malcolm
(86) International application number: PCT/US2005/018718
(87) International publication number: WO 2006/007222

(56) References cited:
- EP-A- 0 746 062
- EP-A- 0 963 090
- EP-A- 1 392 038
- EP-A- 1 408 673
- WO-A-03/096558
- DE-A1- 4 316 073
- US-A- 4 083 011
- US-A1- 2003 199 290
- US-B1- 6 215 474

## Description

### FIELD OF THE INVENTION

The present invention relates in general to handheld communication devices. More particularly, the present invention relates to the mechanical layout and component placement for thin handheld communication devices, which have at least a two part housing, where the first housing part is adapted to rotate relative to the second housing part.

### BACKGROUND OF THE INVENTION

There is an interest in making certain handheld electronic devices such as cellular telephones smaller. Making such devices smaller makes it more convenient to carry them around at all times.

Concurrently there is a trend toward increasing the functionality of devices. In the case of cellular telephones, increased functionality includes providing operability on multiple frequency bands using multiple protocols and providing the ability to take and playback photographs and/or video clips. Adding more functionality often leads to increased components and/or circuit elements, which often correspond to increased space requirements, which is at odds with the desire to make devices smaller. Thus, generally, the volume available for accommodating components is at a premium.

Depending upon the overall design and usage goals the reduction of some dimensions may be more desirable than the reduction of other dimensions. For example, while smaller is generally thought to be better in connection with overall size, size reduction can be limited by usage requirements, where if certain components of a device, such as the keypad, are allowed to shrink too much, the device may become difficult to operate. In other instances, there may be a desire to support ever larger components, such as in the case of display screens. Consequently, it becomes a balancing act of competing tradeoffs, when the components are placed relative to one another.

One of the dimensions for which there is some desire to further reduce the size of the device includes depth. Historically, a reduction in depth has been at least partially achieved by minimizing the depth of each of the individual components contained in a particular component stack up. While this is a valid approach for reducing the overall depth, at any given time, there may be limits as to how far the depth of a particular component may be reduced.

EP-A-1 408 673 discloses a plurality of operation portions arranged at a surface on a sub-display side of a foldable cellular phone with a camera so that various kinds of setting, selection and control can be performed without opening the cellular phone in its folded state, and the cellular phone can achieve improved operability and convenience.

EP-A-0 746 062 discloses an electrical connector that includes a dielectric housing having a mounting face adapted for surface mounting on a printed circuit board.

DE-A-43 16 073 discloses a mobile radio unit, with a radiation source, in which the transceiver unit which represents the radiation source and the carpiece and microphone capsule are assigned to two housing parts which are interconnected detachably or via a sliding mechanism. During operation, the earpiece in particular can be moved to a distance from the transceiver unit which rules out any radiation risk to the highly sensitive organs of the head.

US-A-2003/199290 discloses a portable, foldable electronic device equipped with telephone functions and camera functions, and comprising at least a first housing part a second housing part, hinge means, which are arranged to fold the housing parts into different operating positions, a closed operating position in which the rear walls of the housing parts arc positioned against each other, an opened operating position in which the front walls of the housing parts are positioned next to each other, and camera means integrated in said device.

US 6,215,474 discloses a communication device that operates in first and second modes of operation including a dispatch mode of operation and a telephone mode of operation. The device includes a main body having a top surface and a cover. The cover selectively moves between at least a first position wherein at least a portion of the top surface is covered to provide for selective operation in the dispatch mode and at least a second position herein the top surface is exposed to provide for selective operation is the telephone mode of operation.

The present inventors have recognized that a further approach, which can be used to adjust dimensioning in a particular direction, can involve the rearrangement of one or more of the components. Rearranging one or more of the components may allow some of the components to be shifted relative to other components, with the potential overall effect of achieving an aggregate dimension in one or more directions, such as depth, which meets the desired results.

### BRIEF DESCRIPTION OF THE FIGURES

The present invention will be described by way of exemplary embodiments, but not limitations, illustrated in the accompanying drawings in which like references denote similar elements, and in which:
FIG. 1 is a first perspective view of a first handheld communication device, in a first configuration, for example an opened position;
FIG. 2 is a second perspective view of the first handheld communication device, shown in a second configuration, for example a closed position;
FIG. 3 is an exploded view of the handheld communication device shown in FIGs. 1-2;
FIG. 4 is a cross sectional side view of the handheld device illustrated in FIGs. 1-3;
FIG. 5 is a block diagram of an exemplary mechanical layout and component placement in the prior art;
FIG. 6 is a block diagram of a mechanical layout and component placement, in accordance with at least one embodiment of the present invention;
FIG. 7 is a block diagram of the handheld communication device shown in FIGs. 1-4.

### DETAILED DESCRIPTION

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting; but rather, to provide an understandable description of the invention.

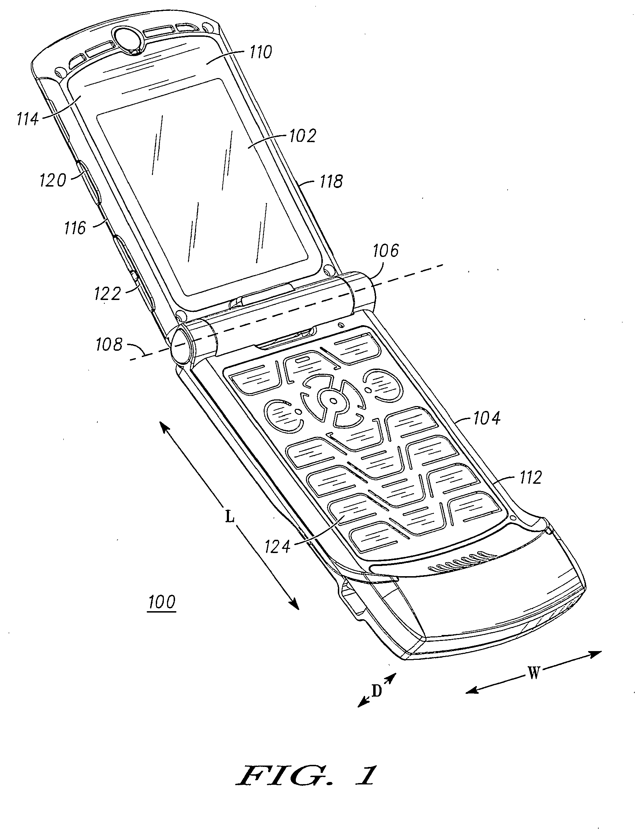

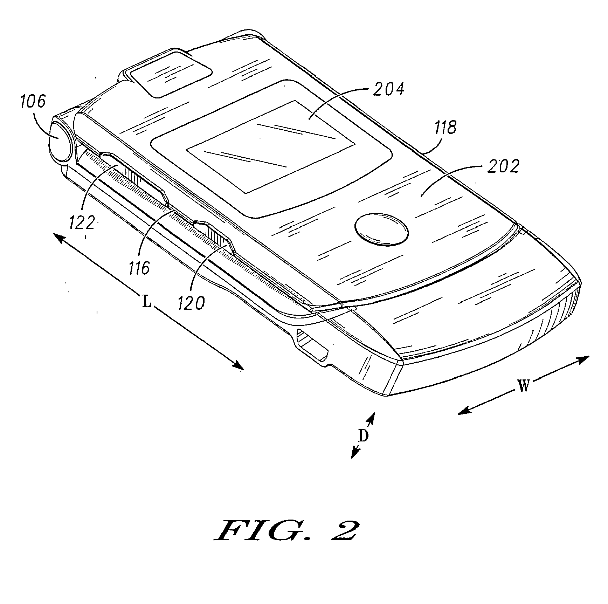

FIG. 1 is a first perspective view of a first handheld communication device, in particular a clamshell wireless communication device 100, shown in a first configuration and FIG. 2 is a second perspective view of the first handheld communication device 100, shown in a second configuration. The device 100 comprises an upper part also know as a flip 102, and a lower part 104. The flip 102 and the lower part 104 are coupled by a rotational coupling, in particular a hinge 106. The device 100 is relatively flat, which is to say that its depth D dimension is smaller than its width W and length L dimensions. In fact, relative to the illustrated embodiment, a reduced depth is an overall design goal. An axis 108 of the hinge 106 is aligned with the width dimension of the device 100. The flip 102 comprise a first inside surface 110, and a first outside surface 202. The lower part 104 comprises a second inside surface 112, and a second outside surface, which is not shown in FIGS. 1 and 2, wherein the second outside surface is facing away from the viewer. The hinge 106 allows the flip 102 to be rotated from the first configuration in which the flip 102 extends upward away from the lower part 104, i.e. opened position, to the second configuration in which the flip 102 overlies the lower part 104, i.e. closed position.

A main display 114 of the device 100 is located at the inside surface 110 of the flip 102. An auxiliary display 204 is located at the outside surface 202 of the flip 102. The main display 114 and the auxiliary display 204 are useful for displaying control screens including menus and information related to communications including lists of received calls, lists of placed calls, telephone numbers in a phone book, email addresses and web addresses, as well as a list of selectable functions, among other things.

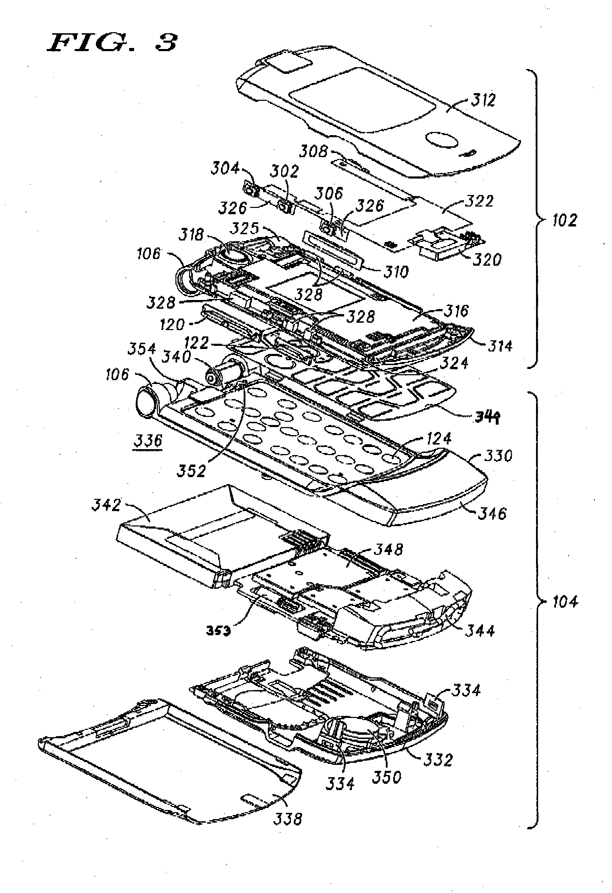

In the illustrated embodiment, the flip 102 comprises a plurality of buttons including a first button 302 (FIG. 3), a second button 304 (FIG. 3), a third button 306 (FIG. 3), and a fourth button 308 (FIG. 3). These buttons 302-308 are not directly visible in FIGs. 1-2. The first through third buttons 302-306 are located proximate a first side edge 116 of the flip 102. The fourth button 308 is located proximate a second side edge 118 of the flip 102. The four buttons 302-308 are covered by three button covers including a first button cover 120, a second button cover 122 and a third button cover 310. The first button 302 and the second button 304 share the first button cover 120, the third button 306 is covered by the second button cover 122, and the fourth button 308 is covered by the third button cover 310. The four buttons 302-308 are used to generate signals for controlling various aspects of the operation of the device 100. In one or more modes of operation of the device 100 the first button 302 and the second button 304 are used as directional inputs, such as "UP" and "DOWN" commands to control software of the device 100. A keypad 124 is located on the inside surface of the lower part 112.

Referring now to FIG. 3 an exploded view of the handheld communication device 100 is shown. As shown in FIG. 3, the flip 102 comprises a flip outer housing part 312 and a flip inner housing part 314 which are coupled together by screws (not shown), or coupled together using one or more other well known elements and/or methods. A number of components are located in the flip 102 between the flip outer housing part 312 and the flip inner housing part 314. These components include a display module 316 that includes the main display 114, and the auxiliary display 204, an earpiece speaker 320, a flexible circuit 322, and a magnet 325. A camera 318 is incorporated as part of the handheld communication device 100 in the space occupied by the hinge 106. When the device 100 is assembled, the flexible circuit 322 is positioned on the display module 316. The flip inner housing part 314 includes an integrally molded rectangular frame 324 that is sized to receive at least a portion of the display module 316, which generally fits within the frame 324. The flexible circuit 322 includes three peripheral tab portions 326 that are folded over the frame 324. The buttons 302-308 are mounted on the peripheral tab portions 326 positioned along the side of the display module 316. A plurality of resilient foam blocks 328 are positioned between the button covers 120, 122, 310 and the frame 324. The resilient foam blocks 328 serve to enhance the tactile feel of the buttons 302-308. The magnet 325 is mounted in the flip inner housing part 314 near the hinge 106, which interacts with a Hall effect sensor, associated with the lower part 104 of the two part housing, as discussed below.

As shown in FIG. 3, the lower part 104 of the device 100 comprises a lower part inner housing part 330 and a lower part outer housing part 332 which are coupled together by screws (not shown) and a pair of resilient catches 334 that are integrally molded with the lower part outer housing part 332. Similar to the upper part, one skilled in the art will recognize other elements and/or methods could be used to hold the lower part inner housing part 330 to the lower part outer housing part 332. A battery compartment 336 is defined between the lower part inner housing part 330, and a battery compartment cover 338 that is located adjacent the lower outer housing part 332. The battery compartment 336 is located proximate a top end 340 of the lower part 104. A battery 342 is substantially disposed in the battery compartment 336. An antenna 344 is located proximate a bottom end 346 of the lower part 104. A populated printed circuit board 348 that includes communication and control circuits of the device 100 is located between the bottom end 346 and the battery compartment 336. The lower part 104 further includes a transducer 353, which is adapted for providing vibrational feedback to the user.

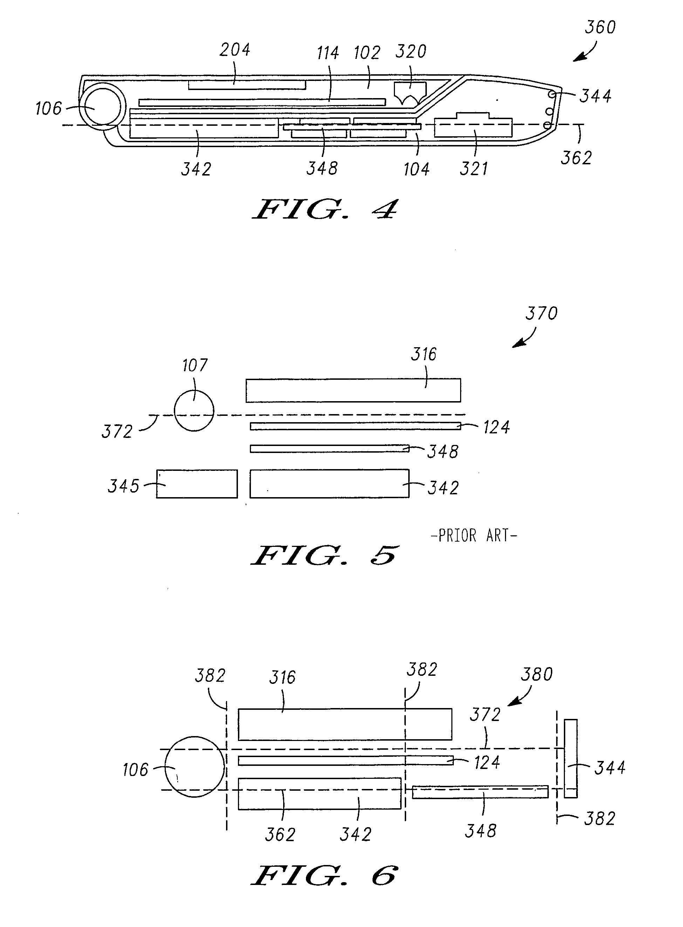

Note that the battery 342 and the populated printed circuit board 348 are located in a common plane 362 (FIG. 4) in a lengthwise L direction, and do not overlap in the direction of depth D. The latter arrangement allows the thickness of the lower part 104 to be reduced, as a result of fewer components being stacked, which reduces the thickness of the entire device 100, making the device 100 more convenient to carry. Note however that this arrangement also limits the longitudinal size of the battery. In the interest of extending battery capacity and thereby the duration of standby time and the amount of communication that can be conducted with the device 100 before battery recharging is necessary, the width of the battery 342 is increased. Placement of the four buttons 302-308 in the flip 102, as opposed to near the top end 340 of the lower part 104 where they would be positioned according to conventional practice, avoids adding to the width of the device 100, which in the illustrated embodiment corresponds to the width of the battery 342, thereby allowing the device 100 to be smaller and making the device 100 more convenient to cany. Positioning the buttons 302-308 in the flip 102 also leads to users tending to position their hands closer to the flip 102 and or the upper part in order to more easily actuate the buttons 302-308. In this position a user's hand will be positioned further away from the antenna 344 located near the bottom end 346 of the lower part 104, and will absorb less energy from signals emanating from, or being received by the antenna 344 thereby leading to improved Quality of Service (QoS). Also; as shown in FIG. 3, the keypad 124 comprises a cover 349 made of a sheet of flexible material. A microphone 350 is mounted on the populated printed circuit board 348 near the bottom end 346 of the lower part 104.

A portion of the lower part inner housing part 330 is shown cutaway to show a Hall effect sensor 352 that is located in lower part 104. The Hall effect sensor 352 works in conjunction with the magnet 325 to sense whether the flip 102 is positioned overlying the lower part 104, such as a proximately closed position, as shown in FIG. 2, or extended away from the lower part 104, such as in an opened position, as shown in FIG. 1. A flexible circuit feedthrough 354 connects circuits in the lower part 104 to circuits in the flip 102. In the assembled device 100 the flexible circuit feedthrough 354 passes through the hinge 106.

FIG. 4 is a cross-sectional side view of the hand-held device illustrated in FIGs. 1-3, in a closed position. The cross-sectional side view further illustrates the battery 342 in the same horizontal plane as the printed circuit board 348, containing the communication and control circuitry, and the hinge 106. This is a departure from prior systems which largely vertically stacked the printed circuit board 348, as shown in FIG. 5, with the battery 342. FIG. 4 further highlights an antenna 344, which is located near the bottom end 346 of the lower part 104, and which is located in an enclosure further including a polyphonic speaker 321. By placing the antenna 344 proximate the bottom end 346 of the lower part 104, the hinge 106 can similarly be located in the same plane 362 as the battery 342 and the printed circuit board 348. As illustrated in FIG. 5, an antenna 345 alternatively located proximate the top end of the lower part 104, could potentially preclude the placement of a hinge 107 in the same plane 362 as the battery 342 and/or the printed circuit board 348.

FIG. 5 is a block diagram 370 of an exemplary mechanical layout and component placement in the prior art. As noted above, the exemplary prior art mechanical layouts generally included a printed circuit board 348, which was vertically stacked relative to the battery 342. The block diagram 370 further illustrates the general spatial relationship of a keypad 124, display assembly 316, hinge 107 and antenna 345. The dashed line 372 represents a common separation point between items located in the upper part or flip 102, and the lower part 104 of the handheld communication device 100.

FIG. 6 is a block diagram of a mechanical layout and component placement, in accordance with at least one embodiment of the present invention, where consistent with the cross sectional side view illustrated in FIG. 4 illustrates the hinge 106, battery 342 and printed circuit board 348, which includes communication and control circuitry, that is located in the same horizontal plane 362. The vertical dashed lines 382, serve to highlight a component placement, where the corresponding elements, which are located in the same horizontal plane 362, do not vertically overlap. In this way the overall depth of the device can be reduced, in so far as the depth of the printed circuit board does not need to be added to the stack up including the battery 342, keypad 124, and display assembly 316.

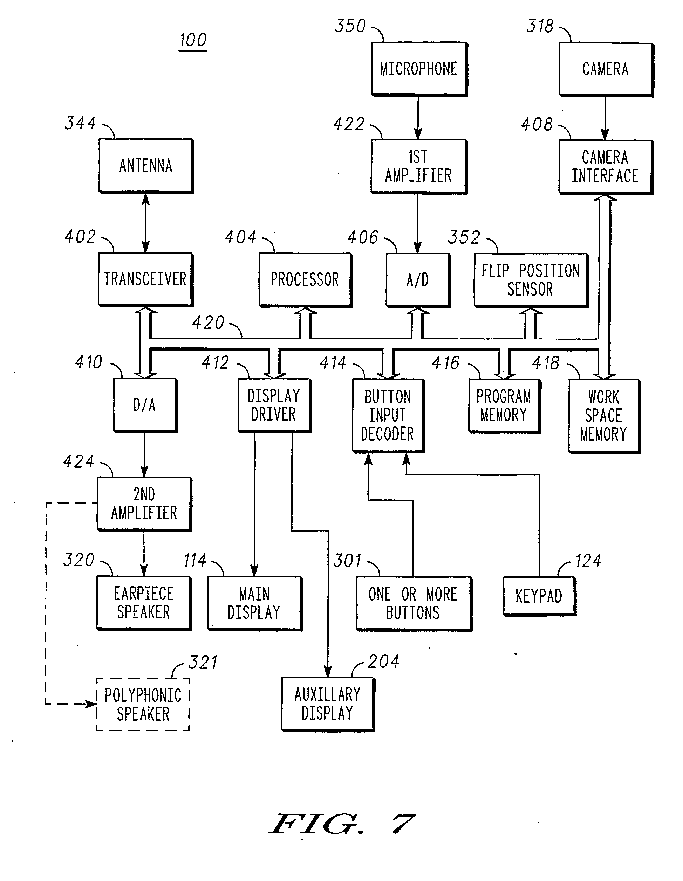

FIG. 7 is a block diagram of the handheld communication device 100 shown in FIGs. 1-4. As shown in FIG. 7 the device 100 comprises a transceiver 402, a processor 404, an analog-to-digital converter (A/D) 406, the flip position sensor 352, a camera interface 408, a digital-to-analog converter (D/A) 410, a display driver 412, a button interface decoder 414, a program memory 416, and a workspace memory 418 coupled together through a system bus 420.

The transceiver 402 is coupled to the antenna 344. Radio Frequency and/or microwave signals that are modulated with encoded data (e.g., digitized voice audio, text messages, photos, etc.) pass between the transceiver 402 and the antenna 344.

The processor 404 executes control programs, and may also perform communication encoding and decoding tasks. Programs executed by the processor 404 are stored in the program memory 416. The processor 404 uses the workspace memory 418 in executing programs. The processor 404 is suitably part of a highly integrated micro-controller integrated circuit. The micro-controller suitably includes one or more of the other above mentioned components that are coupled together through the signal bus 420. The transceiver 402, the processor 404, and optionally other blocks shown in FIG. 7 are embodied in circuits of the populated printed circuit board 348.

The microphone 350 is coupled through a first amplifier 422 to the A/D 406. The A/D 406 is used to digitize a user's spoken words, which are then encoded by a voice encoder (vocoder) component of the processor.

The camera 318 is interfaced to the processor 404 through the camera interface 408. The camera interface 408 reads and digitizes pixel data from the camera 318, and makes such data available to the processor 404 for further processing, e.g., image/video compression encoding.

The button input decoder 414 is coupled to the one or more buttons 301, which in the embodiment illustrated in FIGs. 1-3 includes the first through forth buttons 302-308 located in the flip 102, as well as to the keys of keypad 124. The button input decoder 414 receives the electrically encoded actuation signals from the keypad 124 and the one or more buttons 301 and identifies each depressed key or button to the processor 404.

The display driver 412 drives the main display 114 and the auxiliary display 204. The D/A 410 drives the earpiece speaker 320 through a second amplifier 424. A similar or the same circuit could also be used to drive the polyphonic speaker 321, shown in FIG. 4.

While the preferred and other embodiments of the invention have been illustrated and described, it will be clear that the invention is not so limited. Numerous modifications, changes, variations, substitutions, and equivalents will occur to those of ordinary skill in the art without departing from the scope of the present invention as defined by the following claims.

## Claims

1. A clamshell telephone (100) comprising:
a two part housing including an upper housing (102) and a lower housing (104) rotatably coupled together via a hinge (106), said lower housing (104) having
a battery assembly (342),
communication and control circuitry; and
an antenna (344); **characterized in that**
said hinge (106), said battery assembly (342), said communication and control circuitry, and said antenna (344) are arranged side by side along a common horizontal plane (362) in a non-vertically overlapping relation; and
wherein said hinge (106) is coupled to the lower housing (104) at a first end of the lower housing (104), and said antenna (344) is located proximate a second end of the lower housing (104), which is opposite to the first end.

2. A clamshell telephone in accordance with claim 1 further comprising a speaker (321) and corresponding acoustic chamber, wherein said speaker and corresponding acoustic chamber are located proximate said antenna (344) at the second end of the lower housing (104).

3. A clamshell telephone in accordance with claim 2, wherein said antenna (344) is located within the space forming the acoustic chamber.

4. A clamshell telephone in accordance with claim 1 further comprising a camera (318), which is included within the space containing the hinge (106).

5. A clamshell telephone in accordance with claim 4, wherein said hinge (106) includes a right side hinge element and a left side hinge clement, and wherein said camera is located between the right side hinge element and the left side hinge element.

6. A clamshell telephone in accordance with claim 1, wherein said communication and control circuitry includes a planer substrate.

7. A clamshell telephone in accordance with claim 6, wherein said planer substrate is a printed circuit board (348).

8. A clamshell telephone in accordance with claim 1, wherein said communication and control circuitry includes at least one of power management circuitry, wireless communication circuitry, and audio processing circuitry.

9. A clamshell telephone in accordance with claim 8, wherein said wireless communication circuitry includes a radio frequency transceiver (402).

10. A clamshell telephone in accordance with claim 1, wherein said lower housing (104) includes a keypad (124).

11. A clamshell telephone in accordance with claim 1, wherein said lower housing (104) includes a vibrational element (353), which is adapted for providing to the user at least one of a vibrational alert and vibrational feedback.

12. A clamshell telephone in accordance with claim 1, wherein said upper housing (102) includes a display assembly.

13. A clamshell telephone in accordance with claim 12, wherein said upper housing (102) and wherein the display assembly includes a first display (204), which is visible through the front facing of the upper housing (102), and a second display (114), which is visible through the back facing of the upper housing (102).

14. A clamshell telephone in accordance with claim 1, wherein said upper housing (102) has one or more selectively actuatable control elements (302, 304, 306 and 308).

15. A clamshell telephone in accordance with claim 14, wherein said upper housing (102) has a front facing, which faces away from the lower housing (104) when the upper housing (102) and the lower housing (104) arc in a closed position with the upper housing (102) and the lower housing (104) adjacent to one another along the length of the upper and lower housings, a back facing, which faces toward the lower housing (104) when the upper and lower housing arc in a closed position, and a side edge, which is coupled between the front facing and the back facing at least partly around the outer circumference of the front and back facing, and wherein said selectively actuatable control elements (302, 304, 306 and 308) include buttons located along said side edge of the upper housing (102).

## Patentansprüche

1. Ein Klapptelefon (100), welches
ein zweiteiliges Gehäuse, das einen oberen Gehäuseteil (102) und einen unteren Gehäuseteil (104) beinhaltet, welche über ein Gelenk (106) drehbar miteinander verbunden sind, wobei das untere Gehäuseteil (104)
eine Akkumulatorbaugruppe (342)
Schaltungsgruppe für Datenübertragung und Steuerung sowie
eine Antenne (344) aufweist,
umfasst und **gekennzeichnet ist dadurch**, dass das Gelenk (106), die Akkumulatorbaugruppe (342), die Schaltungsgruppe für Datenübertragung und Steuerung sowie die Antenne (344) entlang einer gemeinsamen horizontalen Ebene (362) nebeneinander in vertikal nicht überlappender Anordnung angeordnet sind, und dass
das Gelenk (106) an einem ersten Ende des unteren Gehäuseteils (104) mit dem unteren Gehäuseteil (104) verbunden ist und die Antenne (344) sich in der Nähe eines zweiten, dem ersten gegenüberliegenden Ende des unteren Gehäuseteils (104) befindet.

2. Klapptelefon nach Anspruch 1, welches weiterhin einen Lautsprecher (321) und einen zugehörigen Resonanzraum beinhaltet, wobei der Lautsprecher und der zugehörige Resonanzraum sich in der Nähe der Antenne (344) an dem zweiten Ende des unteren Gehäuseteils (104) befinden.

3. Klapptelefon nach Anspruch 2, worin die Antenne (344) sich in dem den Resonanzraum bildenden Hohlraum befindet.

4. Klapptelefon nach Anspruch 1, welches weiterhin eine Kamera (318) beinhaltet, die sich innerhalb des das Gelenk (106) enthaltenden Raums befindet.

5. Klapptelefon nach Anspruch 4, worin das Gelenk (106) ein rechtes Gelenkelement und ein linkes Gelenkelement umfasst und worin sich die Kamera zwischen dem rechten Gelenkelement und dem linken Gelenkelement befindet.

6. Klapptelefon nach Anspruch 1, worin die Schaltungsgruppe für Datenübertragung und Steuerung ein planares Substrat beinhaltet.

7. Klapptelefon nach Anspruch 6, worin das planare Substrat eine gedruckte Schaltungskarte (348) ist.

8. Klapptelefon nach Anspruch 1, worin die Schaltungsgruppe für Datenübertragung und Steuerung mindestens eine Schaltung aus der Gruppe Schaltung zur Leistungssteuerung, Schaltung zur drahtlosen Übertragung und Schaltung zur Tonverarbeitung umfasst.

9. Klapptelefon nach Anspruch 8, worin die Schaltungsgruppe für drahtlose Datenübertragung einen Funkfrequenztransceiver (402) beinhaltet.

10. Klapptelefon nach Anspruch 1, worin der untere Gehäuseteil (104) eine Tastatur (124) beinhaltet.

11. Klapptelefon nach Anspruch 1, worin der untere Gehäuseteil (104) ein Schwingelement (353) beinhaltet, das dazu geeignet ist, dem Anwender mindestens eines aus der Gruppe Vibrationsalarm und Vibrationsrückmeldung bereitzustellen.

12. Klapptelefon nach Anspruch 1, worin der obere Gehäuseteil (102) eine Displaybaugruppe beinhaltet.

13. Klapptelefon nach Anspruch 12, worin der obere Gehäuseteil (102) und worin die Displaybaugruppe ein erstes Display (204), das durch die Vorderfläche des oberen Gehäuseteils (102) sichtbar ist, und ein zweites Display (114) das durch die Rückseite des oberen Gehäuseteils (102) sichtbar ist, beinhaltet.

14. Klapptelefon nach Anspruch 1, worin der obere Gehäuseteil (102) eines oder mehrere selektiv betätigbare Steuerelemente (302, 204, 306 und 308) aufweist.

15. Klapptelefon nach Anspruch 14, worin der obere Gehäuseteil (102) eine Vorderseite aufweist, welche von dem unteren Gehäuseteil (104) abgewendet ist, wenn sich der obere Gehäuseteil (102) und der untere Gehäuseteil (104) in einer geschlossenen Position mit dem oberen Gehäuseteil (102) und dem unteren Gehäuseteil (104) entlang der Längsseite des oberen und unteren Gehäuseteils benachbare zueinander befinden, und eine Rückseite aufweist, welche dem unteren Gehäuseteil (104) hin zugewendet ist, wenn sich der obere und untere Gehäuseteil in einer geschlossenen Position befinden, sowie eine Seitenkante aufweist, welche zwischen der Vorderseite und der Rückseite zumindest teilweise um den äußeren Umfang der Vorderseite und der Rückseite verbunden ist, und worin die selektiv betätigbaren Steiierelemente (302, 304, 306 und 308) sich entlang der Seitenkante des oberen Gehäuseteils (102) befindliche Tasten umfasst.

## Revendications

1. Téléphone à clapet (100) comprenant :
un boîtier en deux parties comprenant un boîtier supérieur (102) et un boîtier inférieur (104) couplés ensemble de façon rotative par une charnière (106), ledit boîtier inférieur (104) ayant
un ensemble batterie (342),
une circuiterie de communication et de commande ; et
une antenne (344) ;
**caractérisé par le fait que** ladite charnière (106), ledit ensemble batterie (342), ladite circuiterie de communication et de commande et ladite antenne (344) sont agencés côte à côte le long d'un plan horizontal commun (362) dans une position de chevauchement non vertical ; et
ladite charnière (106) étant couplée au boîtier inférieur (104) à une première extrémité du boîtier inférieur (104) et ladite antenne (344) étant située à proximité d'une seconde extrémité du boîtier inférieur (104), qui est opposée à la première extrémité.

2. Téléphone à clapet selon la revendication 1, comprenant en outre un haut-parleur (321) et une chambre acoustique correspondante, ledit haut-parleur et la chambre acoustique correspondante étant situés à proximité de ladite antenne (344) à la seconde extrémité du boîtier inférieur (104).

3. Téléphone à clapet selon la revendication 2, dans lequel ladite antenne (344) est située à l'intérieur de l'espace formant la chambre acoustique.

4. Téléphone à clapet selon la revendication 1, comprenant en outre un appareil photo (318), qui est inclus à l'intérieur de l'espace contenant la charnière (106).

5. Téléphone à clapet selon la revendication 4, dans lequel ladite charnière (106) comprend un élément de charnière côté droit et un élément de charnière côté gauche, et ledit appareil photo est situé entre l'élément de charnière côté droit et l'élément de charnière côté gauche.

6. Téléphone à clapet selon la revendication 1, dans lequel ladite circuiterie de communication et de commande comprennent un substrat plan.

7. Téléphone à clapet selon la revendication 6, dans lequel ledit substrat plan est une carte de circuits imprimés (348).

8. Téléphone à clapet selon la revendication 1, dans lequel ladite circuiterie de communication et de commande comprend au moins l'une d'une circuiterie de gestion d'alimentation, une circuiterie de communication sans fil et/ou une circuiterie de traitement audio.

9. Téléphone à clapet selon la revendication 8, dans lequel ladite circuiterie de communication sans fil comprend un émetteur-récepteur de radiofréquence (402).

10. Téléphone à clapet selon la revendication 1, dans lequel ledit boîtier inférieur (104) comprend un clavier (124).

11. Téléphone à clapet selon la revendication 1, dans lequel ledit boîtier inférieur (104) comprend un élément vibrant (353), qui est apte à fournir à l'utilisateur au moins l'une d'une alerte par vibration et/ou d'une rétroaction par vibration.

12. Téléphone à clapet selon la revendication 1, dans lequel ledit boîtier supérieur (102) comprend un ensemble d'affichage.

13. Téléphone à clapet selon la revendication 12, dans lequel ledit boîtier supérieur (102) et l'ensemble d'affichage comprend un premier dispositif d'affichage (204), qui est visible à travers la façade avant du boîtier supérieur (102), et un second dispositif d'affichage (114), qui est visible à travers la façade arrière du boîtier supérieur (102).

14. Téléphone à clapet selon la revendication 1, dans lequel ledit boîtier supérieur (102) a un ou plusieurs éléments de commande actionnables de manière sélective (302, 304, 306 et 308).

15. Téléphone à clapet selon la revendication 14, dans lequel ledit boîtier supérieur (102) a une façade avant, qui est tournée à l'opposé du boîtier inférieur (104) lorsque le boîtier supérieur (102) et le boîtier inférieur (104) sont dans une position fermée avec le boîtier supérieur (102) et le boîtier inférieur (104) adjacents l'un à l'autre le long de la longueur des boîtiers supérieur et inférieur, une façade arrière, qui est tournée vers le boîtier inférieur (104) lorsque les boîtiers supérieur et inférieur sont dans une position fermée, et un bord latéral, qui est couplé entre la façade avant et la façade arrière au moins partiellement autour de la circonférence extérieure des façades avant et arrière, et dans lequel lesdits éléments de commande actionnables de manière sélective (302, 304, 306 et 308) comprennent des boutons situés le long dudit bord latéral du boîtier supérieur (102).
